# EUROPÄISCHE PATENTSCHRIFT

(11) **EP 2 458 229 B1**
(45) Veröffentlichungstag und Bekanntmachung des Hinweises auf die Patenterteilung: **09.09.2015**
(21) Anmeldenummer: 11009343.2
(22) Anmeldetag: 24.11.2011
(51) Int. Cl.: F16B 7/18

(54) **Verbindungsvorrichtung**
Connecting device
Dispositif de connexion

(30) Priorität: 25.11.2010 AT 7252010; 28.02.2011 DE 202011003315 U; 28.02.2011 DE 102011012646
(43) Veröffentlichungstag der Anmeldung: 30.05.2012
(73) Patentinhaber: i-dimod GmbH & Co. KG, 36132 Eiterfeld (DE)
(72) Erfinder: Isert, Hugo, 36132 Eiterfeld (DE)
(74) Vertreter: Weihrauch, Frank

(56) Entgegenhaltungen:
- EP-A1- 0 233 525
- EP-A2- 1 070 859
- DE-A1-102005 060 817

## Beschreibung

Die Erfindung betrifft eine Verbindungsvorrichtung zum Verbinden eines ersten Bauteils an dessen Stirnseite mit einem zweiten Bauteil an dessen genuteter Längsseite, insbesondere nach dem Oberbegriff des Anspruchs 1. Eine solche Verbindungsvorrichtung ist aus der EP 1 070 859 A2 bekannt

Aus dem Stand der Technik, insbesondere aus dem Maschinenbau und der Automatisierungstechnik sind Bauteilkonstruktionen, speziell unter Verwendung sogenannter Montage- oder Konstruktionsprofile, mit den dazugehörigen Verbindungselementen bekannt.

Eine derartige Bauteilkonstruktion ist beispielsweise in EP 1 729 018 B2 offenbart.

Das darin beschriebene Profilverbindungssystem weist einen ersten Profilstab auf, welcher mit einem Widerlager versehen ist.

Das Widerlager ist mittels einer Schraube, welche in der Bohrung eines axialen Langlochs in dem ersten Profilstab angeordnet ist, mit einem, in einem zweiten Profilstab angeordneten, Zuganker verbind- und verspannbar.

Zu diesem Zweck ist das Widerlager als Gewindeeinsatz mit einem selbstschneidenden Aussengewinde, welches in die Bohrung des axialen Langlochs des ersten Profilstabs eingesetzt wird ausgebildet.

Um bei dieser Konstruktion die Schraube zum Verbinden des Widerlagers mit dem Zuganker zu erreichen, muss in dem ersten Profilstab eine Schlüsselöffnung geschaffen werden.

Dies wiederum erfordert einen zusätzlichen Bearbeitungsaufwand und führt unter Umständen an dieser Stelle zu einer strukturellen Schwächung des ersten Profilstabs und dadurch zu einer Schwachstelle innerhalb der gesamten Profilkonstruktion.

Um derartige Schwachstellen in einer Profilkonstruktion, sowie zusätzliche Bearbeitungsschritte vor dem Zusammensetzen zweier Profilstäbe zu vermeiden, ist es zweckmäßig, eine Verbindungsvorrichtung zu verwenden, welche ohne die oben genannten Bearbeitungsschritte auskommt und trotzdem eine stabile Verbindung von zwei Profilen miteinander ermöglicht.

Eine derartige Konstruktion findet sich in Druckschrift DE 41 27 284 C1.

Die hierin offenbarte Profilkonstruktion weist zwei Profilstäbe auf, welche jeweils mindestens eine, mit wenigstens einer Hinterschneidung versehene, Längsnut aufweisen.

Ebenso ist zumindest ein Profilstab mit einer Längsbohrung versehen, an deren Ende ein Gewinde eingebracht ist.

Das Gewinde dient dazu, mittels einer ersten Schraube ein, mit wenigstens einem Schenkel versehenes, Haltestück so an dem ersten Profilstab zu befestigen, dass der Schenkel nach dem Einsetzen des Haltestücks in die Längsnut des zweiten Profilstabs dessen Hinterschneidung hintergreift.

Um eine spielfreie Verbindung der beiden Profilstäbe zu erhalten, wird eine zweite Schraube auf die Weise schräg in das Haltestück eingeschraubt, dass sich die zweite Schraube gegen den Kopf der ersten Schraube abstützt.

Durch dieses Abstützen wird der Schenkel des Halteelements an den Stegteil der Hinterschneidung gepresst und dadurch die endgültige, spielfreie Verbindung der Profilstäbe erreicht. Die Anpresskraft wird somit über das Abstützen der somit auf Schub belasteten zweiten Schraube an dem Kopf der ersten Schraube vermittelt.

Die hier offenbarte Vorrichtung weist jedoch prinzipbedingte Nachteile auf.

Zum einen handelt es sich bei dem Haltestück um ein vergleichsweise aufwändig herzustellendes Element, was wiederum höhere Herstellungskosten mit sich bringt, zum anderen ist bei der Verwendung der Vorrichtung eine zwingende Montagereihenfolge einzuhalten.

So muss hierbei zuerst das Halteelement mit dem ersten Profilstab verbunden werden, bevor die gesamte Konstruktion aus erstem Profilstab und Haltestück mit dem zweiten Profilstab verbunden werden kann. Da das Haltestück so ausgebildet ist, dass es die Hinterschneidung der Längsnut hintergreifen muss, ist es je nach Einbaubedingung nicht möglich oder erschwert, die Vorrichtung an beliebiger Stelle des zweiten Profils anzusetzen, insbesondere wenn nicht mindestens eine Seite der Längsnut offen endet, so dass das Haltestück nicht mehr seitlich eingeschoben werden kann. Dies ist vor allem dann der Fall, wenn an dem zweiten Profil bereits beidseits der geplanten Verbindung andere Verbindungen angebracht sind.

Ein weiterer Nachteil der dargestellten Erfindung besteht in der Art der Belastung des Kopfes der ersten Schraube, da dieser durch das Abstützen der zweiten Schraube eine starke einseitige Punktbelastung erfährt, wobei die Kraftangriffsrichtung schräg zur Achse der ersten Schraube verläuft.

Dieser ungünstige Krafteintrag kann bei Belastung dazu führen, dass sich der Kopf gegenüber dem Schraubenschaft oder der Schraubenschaft selbst verbiegt und somit die Festigkeit der gesamten Verbindung geschwächt wird.

Eine weitere Vorrichtung zum Verbinden zweier Profilstäbe ist in der eingangs genannten Druckschrift EP 1 070 859 A2 offenbart.

Die hier beschriebene Lösung sieht eine Plattenverbindereinheit vor, welche an der Stirnseite des ersten Profilstabes angeordnet wird. Die Anordnung der Plattenverbindereinheit erfolgt dabei mittels einer Schraube, welche in eine entsprechende stirnseitige Ausnehmung des ersten Profilstabes eingreift.

Des Weiteren sieht die beschriebene Lösung einen Nutenstein vor, welcher in eine Längsnut des zweiten Profils eingreift und welcher mittels Schrauben mit der Plattenverbindereinheit verbindbar ist.

Die Nachteile der in EP 1 070 859 A2 offenbarten Lösung bestehen zum einen darin, dass nach dem Verbinden der Profilstäbe prinzipbedingt stets ein Abstand zwischen der Stirnseite des ersten Profilstabes und der Längsseite des zweiten Profilstabes verbleiben muss, welcher von der Plattenverbindereinheit beansprucht wird.

In diesem Abstandsbereich ist es bei dieser Lösung nicht möglich, weitere Elemente anzuordnen.

Zum zweiten erfordert es die hier aufgezeigte Lösung, dass die Plattenverbindereinheit stets an die Außenabmessungen der zu verbindenden Profilstäbe angepasst sein muss, da sich sonst beispielsweise unerwünschte Überstände ausbilden.

Es müssen somit für unterschiedliche Profilstabaußenmaße auch unterschiedliche Plattenverbindereinheiten bereitgehalten werden, was sich insbesondere negativ auf die Bereitstellungskosten einer solchen Konstruktion auswirkt.

Zum dritten ist die offenbarte Lösung für optisch ansprechende Verbindungen nicht geeignet, da die Plattenverbindereinheit stets sichtbar ist.

Die Erfindung hat somit die Aufgabe, unter Vermeidung der aufgezeigten Nachteile des Stand der Technik, eine Verbindungsvorrichtung zum Verbinden eines ersten Bauteils an dessen Stirnseite, mit einem zweiten Bauteil an dessen genuteter Längsseite zu schaffen, welche keine zusätzlichen Bearbeitungsschritte mit Substanzeingriff an einem der Bauteile erfordert, die universell an einer beliebigen Stelle einer Längsnut eines Bauteils eingesetzt werden kann, die schnelle und einfache Montierbarkeit und eine gute Lösbarkeit ermöglicht sowie kostengünstig erstellt werden kann.

Die Aufgabe wird durch die im Patentanspruch 1 aufgeführten Merkmale gelöst. Bevorzugte Weiterbildungen ergeben sich aus den Unteransprüchen.

Ein erstes Bauteil, welches durch eine erfindungsgemäße Verbindungsvorrichtung mit einem zweiten Bauteil verbindbar ist, weist an seiner Stirnseite mindestens einen Gewindeeinzug auf. Als Stirnseite wird hierbei jede Seite eines Bauteils verstanden, welche mit einem Gewindeeinzug versehen ist. Das erste und das zweite Bauteil sind nicht Bestandteil der erfindungsgemäßen Verbindungsvorrichtung.

Unter Gewindeeinzug wird hierbei insbesondere eine in dem Bauteil bereits vorhandene Längsöffnung verstanden, in welche ein Gewinde, beziehungsweise eine selbstschneidende Schraube einbringbar ist.

Ein zweites, über eine erfindungsgemäße Verbindungsvorrichtung mit dem ersten Bauteil verbindbares, Bauteil weist an dessen genuteter Längsseite mindestens eine Längsnut auf, welche mindestens eine Hinterschneidung aufweist. Unter genuteter Längsseite wird jede Seite eines Bauteils verstanden, welche mit einer Längsnut versehen ist.

Unter Hinterschneidung wird im vorliegenden Fall verstanden, dass sich ein Steg auf der offenen Seite der Längsnut befindet, welcher den Querschnitt der Längsnut auf deren offener Seite verjüngt.

Die erfindungsgemäße Verbindungsvorrichtung, mit welcher die beiden oben genannten Bauteile miteinander verbindbar sind, weist einen Nutenstein mit einer Gewindebohrung auf, mit welchem ein Eingriff in mindestens eine Hinterschneidung der Längsnut des zweiten Bauteils in der Art hintergreift, dass die dem Steg der Längsnut zugewandte Fläche des Nutensteins, zumindest teilweise, auf selbigem Steg aufliegt.

Der Nutenstein ist dabei beispielsweise als Frästeil, insbesondere aus Stahl, gefertigt.

Weiterhin weist die Verbindungsvorrichtung ein Koppelelement auf, welches über eine erste und eine zweite Ausnehmung verfügt.

Die erste Ausnehmung wird dabei von einer Ankerschraube durchsetzt, mit welcher ein Eingriff in den Gewindeeinzug des ersten Bauteils bereitstellbar ist, wobei mittels der Ankerschraube das Koppelelement mit dem ersten Bauteil an dessen Stirnseite verbindbar ist.

Als Ankerschraube kommt jede Art von Schraube in Frage, insbesondere eine handelsübliche Zylinderschraube mit Innensechskant.

Durch die Verwendung einer bereits vorhandenen Längsöffnung als Gewindeeinzug für die Ankerschraube wird hierbei als besonderer Vorteil erreicht, dass keine zusätzlichen Bearbeitungsmaßnahmen, wie beispielsweise eine Bohrung, an dem ersten Bauteil erforderlich sind, um das Koppelelement an diesem zu befestigen.

Die zweite Ausnehmung innerhalb des Koppelelements dient als Durchlass für eine Koppelschraube, welche in die bereits genannte Gewindebohrung des Nutensteins eingreift und diesen dadurch mit dem Koppelelement verbindet.

Auch als Koppelschraube kommt jede Art von Schraube in Frage, insbesondere jedoch eine handelsübliche Zylinderschraube mit Innensechskant.

Das Koppelelement selbst ist beispielsweise als einfaches Stanz-Biegeteil, insbesondere aus verzinktem Stahl, hergestellt.

Der Nutenstein weist außer der bereits genannten Gewindebohrung noch eine Montageausnehmung auf, durch welche die Ankerschraube für ein Schraubwerkzeug zugänglich ist. Als Schraubwerkzeug ist je nach Ausbildung des Schraubenkopfes der Ankerschraube beispielsweise bei einem Innensechskantkopf ein Innensechskantschlüssel oder bei einem Kreuzschlitzkopf ein Kreuzschlitzschraubendreher zu verstehen. Die Montageausnehmung ist vorzugsweise als ausreichend große Bohrung ausgebildet und befindet sich in axialer Verlängerung der Koppelschraube. Diese Montageausnehmung ermöglicht ein Festziehen und Lösen der Ankerschraube auch dann, wenn der Nutenstein und das Koppelelement durch die Koppelschraube bereits verbunden sind. Als besonderer Vorteil ist also eine Veränderung der sonst erforderlichen Montagereihenfolge und eine Vorkonfektionierung der Baugruppe Koppelelement-Nutenstein-Koppelschraube möglich.

Die Montage zweier Bauteile mittels einer erfindungsgemäßen Verbindungsvorrichtung erfolgt vorzugsweise derart, dass als erster Arbeitsschritt mittels der Koppelschraube, welche durch die zweite Ausnehmung des Koppelelements in die Gewindebohrung des Nutensteins eingesetzt wird, das Koppelelment und der Nutenstein vormontiert werden. Dabei wird die Koppelschraube zunächst nur soweit angezogen, dass ein für die weitere Montage ausreichendes Spiel verbleibt. Als besonderer Vorteil können Nutenstein und Koppelelement auch als bereits vormontierte Baugruppe geliefert werden. Dies erspart Montageaufwand vor Ort, was insbesondere bei schwierigen Einbaubedingungen und kleinen Baugrößen sehr vorteilhaft ist. Insbesondere wird damit verhindert, dass bei einem Verwackeln Koppelschraube, Koppelelement oder Nutenstein herunterfallen.

In dem sich anschließenden Arbeitsschritt wird die Ankerschraube durch die Montageausnehmung des Nutensteins sowie durch die erste Ausnehmung des Koppelelments geführt und in dem stirnseitigen Gewindeeinzug des ersten Bauteils eingesetzt und fest verschraubt. Dadurch wird eine feste und spielfreie Verbindung von Koppelelment und erstem Bauteil bewirkt. Es ist ein weiterer Vorteil, dass die Ankerschraube in der Montageausnehmung des Nutensteins zusätzlich geführt und damit die Montage der Ankerschraube erleichtert wird.

Als folgender Arbeitsschritt wird der Nutenstein der vormontierten Einheit aus Nutenstein, Koppelschraube, Koppelelement, Ankerschraube und erstem Bauteil mit dem, gemäß dem ersten Arbeitsschritt, gegebenen Spiel in die Längsnut des zweiten Bauteils eingeschoben und durch Verschieben in der Längsnut an die gewünschte Position gebracht.

Um die endgültige feste und spielfreie Verbindung beider Bauteile herzustellen wird als letzter Arbeitsschritt die Koppelschraube angezogen, wodurch das von ihr durchsetzte Koppelelement und mit diesem, das damit bereits fest verbundene, erste Bauteil gegenüber dem Nutenstein angezogen wird. Durch das Anziehen der Koppelschraube wird damit der, durch die Hinterschneidung im Eingriff mit dem Längsprofil stehende, Nutenstein gegen zumindest einen Steg der Längsnut des zweiten Bauteils gedrückt, wodurch sich eine gewünschte Pressverbindung zwischen erstem Bauteil und zweitem Bauteil ausbildet.

Die Montage kann aber auch so erfolgen, dass zuerst das Koppelelement mittels der Ankerschraube an dem stirnseitigen Gewindeeinzug des ersten Bauteils fest verschraubt wird. Anschließend wird mittels der Koppelschraube der Nutenstein mit dem Koppelelement verbunden. Vorteilhafterweise kann dabei der Nutenstein je nach Einbaubedingungen zuvor in die Längsnut des zweiten Bauteils eingesetzt oder erst nach der Herstellung der Verbindung in eine seitlich offene Längsnut eingeschoben werden. Im Falle des Einschiebens ist es notwendig, zwischen dem Koppelelement und dem Nutenstein zunächst ein entsprechend großes Spiel zu belassen, um beide Elemente gegeneinander verschieben zu können.

Um die endgültige feste und spielfreie Verbindung beider Bauteile herzustellen wird die Koppelschraube angezogen, wodurch das von ihr durchsetzte Koppelelement und mit diesem, das damit bereits fest verbundene, erste Bauteil gegenüber dem Nutenstein gezogen wird. Durch das Anziehen der Koppelschraube wird damit der, durch die Hinterschneidung im Eingriff mit dem Längsprofil stehende, Nutenstein gegen zumindest einen Steg der Längsnut gedrückt, wodurch sich eine gewünschte Pressverbindung zwischen erstem Bauteil und zweitem Bauteil ausbildet.

Durch die Verwendung einer Anker- und einer Koppelschraube, in der oben genannten Weise, wird eine Verbindung mit zwei, in entgegengesetztem Richtungssinn angeordneten, Schrauben gebildet, welche im Ergebnis die zu verbindenden Bauteile gegeneinanderziehen.

Als besonderer technologischer Vorteil ist durch die erfindungsgemäße Verbindungsvorrichtung ein direktes stirnseitiges Anliegen des ersten Bauteils an der Längsseite des zweiten Bauteils bereitstellbar.

Somit stehen auf besonders vorteilhafte Weise die Längsnuten beider Bauteile über deren gesamte Länge und insbesondere in dem direkten Verbindungsbereich der Bauteile zur Aufnahme weiterer Montageelemente zur Verfügung.

Eine erfindungsgemäße Verbindungsvorrichtung ist besonders vorteilhaft universell einsetzbar.

Dies meint zum Einen, dass alle solche Bauteile miteinander verbunden werden können, sofern ein Bauteil mit einem Gewindeeinzug versehen oder versehbar ist und ein zweites Bauteil eine Längsnut mit Hinterschneidung aufweist.

Zum Zweiten ist die erfindungsgemäße Verbindungsvorrichtung auch insofern universell einsetzbar, dass bei gleichen Abmessungen der Verbindungsvorrichtung Bauteile unterschiedlicher Abmessungen und Ausbildung, insbesondere des Querschnitts, verbunden werden können, wobei lediglich eine Paarung von Nutenstein und Längsnut gewährleistet sein muss. Es müssen somit also keine unterschiedlich dimensionierten Verbindungsvorrichtungen für unterschiedlich dimensionierte Bauteilquerschnitte und -außenabmessungen vorgehalten werden, wodurch gegenüber den bekannten Lösungen insbesondere die Bereitstellungskosten für eine erfindungsgemäße Verbindungsvorrichtung niedrig gehalten werden können.

Die Verbindungsvorrichtung weist ferner den Vorteil auf, dass sie ohne Eingriff in die Struktur beider Bauteile, wie durch Ausfräsen, Bohren oder Ausklinken anwendbar ist.

Sowohl durch die einfache Herstellbarkeit des Koppelelements und des Nutensteins als auch durch die Verwendbarkeit handelsüblicher Zylinderschrauben als Anker- und Koppelschraube können, als besonderer Vorteil, die Herstellungskosten für eine gattungsgemäße Verbindungsvorrichtung gering gehalten werden.

Der Nutenstein ist in einer ebenfalls bevorzugten Variante der Verbindungsvorrichtung so ausgebildet, dass dieser auf der, dem ersten Bauteil zugewandten Seite eine Aussparung aufweist, in welcher der, dem Koppelelement gegenüberliegende Teil der Ankerschraube versenkbar ist. Die Aussparung kann ganz oder teilweise durch die Montageausnehmung gebildet sein.

Dadurch wird es vorteilhaft ermöglicht, dass als Ankerschraube, wie bereits erwähnt, handelsübliche Schrauben, insbesondere Zylinderschrauben zum Einsatz kommen und gleichzeitig Nutenstein und Koppelelement, zumindest abschnittsweise flächig in Anlage gebracht werden können.

Durch das zumindest teilweise abschnittsweise flächige Anliegen von Nutenstein und Koppelelement wird bei der Verwendung einer erfindungsgemäßen Verbindungsvorrichtung ein günstiger Kraftverlauf zwischen Nutenstein und Koppelelement, insbesondere bei Scherbeanspruchung, gewährleistet.

Der dem Koppelelement gegenüberliegende Teil der Koppelschraube kann hierbei auch formschlüssig in die Aussparung des Nutensteins eingreifen, wodurch eine weitere Verdrehsicherung erzielt werden kann.

In einer bevorzugten Weiterbildung übergreift die Montageausnehmung die Ankerschraube teilweise, wobei die Zugänglichkeit für ein Schraubwerkzeug weiterhin gegeben bleibt. Beispielsweise ist dazu die Montageausnehmung als eine Bohrung in dem Nutenstein mit zwei Abschnitten unterschiedlichen Durchmessers ausgebildet. Dabei befindet sich der erste Abschnitt auf der, dem Koppelelement zugewandten Seite. Dieser Abschnitt stellt eine Aussparung dar. Hier ist der Durchmesser der Bohrung größer oder zumindest gleich dem Außendurchmesser des Schraubenkopfes der Ankerschraube, so dass der Schraubenkopf von dem Nutenstein aufgenommen werden kann. Der zweite Abschnitt befindet sich auf der anderen Seite, also der Seite des Schraubwerkzeugzugriffs und ist kleiner ausgebildet als der Außendurchmesser des Schraubenkopfes, wobei der Durchmesser noch ausreichend groß für eine Zugänglichkeit des Schraubwerkzeuges zur Ankerschraube ist.

Der besondere Vorteil dieser Weiterbildung besteht in dem ermöglichten Montagevorteil. Durch die Übergreifung kann die Ankerschraube nicht mit deren Schraubenkopf durch den Nutenstein hindurchgeführt werden und nicht herausfallen. Die bereits beschriebene Vorkonfektionierung kann mittels der Weiterbildung so verbessert werden, dass eine Baugruppe aus Nutenstein, Koppelschraube, Koppelelement und Ankerschraube vormontiert werden kann. Zur Herstellung dieser vorkonfektionierbaren Baugruppe wird die Ankerschraube mit ihrem Schaft in die erste Ausnehmung des Koppelelements eingesetzt. Nachfolgend wird die Koppelschraube durch die zweite Ausnehmung des Koppelelements geführt und in der Gewindebohrung des Nutensteins angesetzt. Damit ist die Lagebeziehung zwischen allen vier Bauteilen unter Berücksichtigung eines Spiels festgelegt. Dabei wird die Ankerschraube in ihrer axialen Bewegung auf der einen Seite durch den, auf dem Koppelelement, aufliegenden Kranz des Schraubenkopfes und auf der anderen Seite durch den übergreifenden Teil der Montageausnehmung des Nutensteins begrenzt.

Die beschriebene vorkonfektionierte Baugruppe vereinfacht die Montage vor Ort. Es wird dort lediglich noch die Ankerschraube in den stirnseitigen Gewindeeinzug des ersten Bauteils eingesetzt und fest verschraubt, wobei das Schraubwerkzeug durch die Montageausnehmung angewandt wird. Die nachfolgende Montage erfolgt dann wie zu Anspruch 1 beschrieben.

In einer bevorzugten Variante ist eine erfindungsgemäße Verbindungsvorrichtung so ausgebildet, dass der, dem Nutenstein gegenüberliegende Teil der Koppelschraube, vorzugsweise der Schraubenkopf, an dem ersten Bauteil anliegt.

Als besonderer Vorteil wird durch die hierbei entstehende, formschlüssige Verbindung zwischen dem, dem Nutenstein gegenüberliegenden Teil der Koppelschraube, vorzugsweise dem Schraubenkopf, und dem ersten Bauteil eine zusätzliche Abstützung der Verbindungsvorrichtung gegenüber, auf das erste Bauteil einwirkenden, Torsionskräften und somit eine zusätzliche Verdrehsicherheit zwischen den beiden Bauteilen erzielt.

Die formschlüssige Verbindung erfolgt dabei vorzugsweise derart, dass die Koppelschraube so innerhalb einer Längsnut des ersten Bauteils angeordnet ist, dass sich der Schraubenkopf innerhalb der Längsnut befindet und an mindestens einer Innenwandung der Längsnut anliegt.

Dabei hat sich gezeigt, dass bei dieser bevorzugten Anordnung der Koppelschraube, insbesondere des Schraubenkopfes, dieser nicht über die stirnseitigen Abmessungen des ersten Bauteils hinausragt und es dadurch besonders vorteilhaft ermöglicht wird, weitere Bauteile abstandslos zu der betreffenden, genuteten Längsseite des ersten Bauteils, an dem zweiten Bauteil zu montieren.

In einer weiteren bevorzugten Ausgestaltung der Verbindungsvorrichtung greift das Koppelelement, zumindest teilweise, in die Längsnut des zweiten Bauteils ein.

Der Eingriff erfolgt dabei derart, dass das Koppelelement, zumindest teilweise, an mindestens einem Steg der Nut anliegt und mit diesem eine formschlüssige Verbindung eingeht.

Dieser, zumindest teilweise, formschlüssige Eingriff des Koppelelements in die Längsnut des zweiten Bauteils ermöglicht, als besonderen Vorteil, eine exakte Positionierung des ersten Bauteils während des Verbindens mit dem zweiten Bauteil, da hierdurch bereits vor dem Herstellen der eigentlichen Verbindung eine Vorfixierung des ersten Bauteils gegenüber dem zweiten Bauteil bereitgestellt wird. Ein weiterer Vorteil dieses Formschlusses besteht in der Verbesserung der Aufnahme von Torsionskräften aus dem ersten Bauteil und damit der Verdrehsicherheit.

In einer weiteren bevorzugten Weiterbildung greift das Koppelelement zumindest teilweise in eine Ausnehmung an der Stirnseite des ersten Bauteils ein. Es ist einerseits möglich, eine solche Ausnehmung eigens zu schaffen. Bei Verwendung von Systemprofilen muss eine solche Ausnehmung in dem ersten Bauteil jedoch nicht eigens geschaffen werden. Wenn es sich beispielsweise sowohl bei dem ersten als auch bei dem zweiten Bauteil um Bauteile mit einer Längsnut handelt, weist das erste Bauteil stirnseitig den Querschnitt der Längsnut als Ausnehmung auf. Das Koppelelement ist dann so ausgebildet, dass es an seiner, dem ersten Bauteil zugewandten Seite, im Bereich des Querschnitt der Längsnut des ersten Bauteils eine Nase aufweist, welche vorzugsweise so ausgebildet ist, dass sie in diesen Querschnitt der Längsnut einragt und beidseitig an den Stegen der Längsnut anliegt. Dadurch ist ein Formschluss zwischen Koppelelement und erstem Bauteil hergestellt, durch welchen Scher- und Torsionskräfte zwischen dem Koppelelement und dem ersten Bauteil übertragen werden können. Insbesondere in Verbindung mit der zuvor beschriebenen Weiterbildung, bei der das Koppelelement zumindest abschnittsweise in die Längsnut des zweiten Bauteils eingreift, wird ein zuverlässiger Formschluss von erstem und zweitem Bauteil, vermittelt über das Koppelelement, bereitsgestellt, über den zuverlässig Scher- und Torsionskräfte übertragen werden können.

Der Nutenstein ist in einer ebenfalls bevorzugten Variante der Verbindungsvorrichtung so ausgebildet, dass dieser auf der, dem ersten Bauteil zugewandten Seite eine Aussparung aufweist, in welcher der, dem Koppelelement gegenüberliegende Teil der Ankerschraube versenkbar ist.

Dadurch wird es vorteilhaft ermöglicht, dass als Ankerschraube, wie bereits erwähnt, handelsübliche Schrauben, insbesondere Zylinderschrauben zum Einsatz kommen und gleichzeitig Nutenstein und Koppelelement, zumindest abschnittsweise flächig in Anlage gebracht werden können.

Durch das zumindest teilweise abschnittsweise flächige Anliegen von Nutenstein und Koppelelement wird bei der Verwendung einer erfindungsgemäßen Verbindungsvorrichtung ein günstiger Kraftverlauf zwischen Nutenstein und Koppelelement, insbesondere bei Scherbeanspruchung, gewährleistet.

Der dem Koppelelement gegenüberliegende Teil der Koppelschraube kann hierbei auch formschlüssig in die Aussparung des Nutensteins eingreifen, wodurch eine weitere Verdrehsicherung erzielt werden kann.

In einer weiteren bevorzugten Ausbildung der Erfindung sind sowohl das Koppelelement, als auch der, dem Koppelelement gegenüberliegende, Bereich des Nutensteins winklig ausgebildet.

Die abgewinkelte Ausbildung von Koppelelement und dem, diesen gegenüberliegenden Bereich des Nutensteins ermöglicht, als besonderen Vorteil, eine Schrägstellung der Koppelschraube gegenüber der Längsachse des ersten Bauteils und erlaubt somit einen schrägen Eingriff eines passenden, handelsüblichen Werkzeuges, insbesondere eines Sechskantschlüssels, zum Verschrauben von Koppelelement und Nutenstein, was die Handhabung einer erfindungsgemäßen Verbindungsvorrichtung erheblich vereinfacht.

Insbesondere kann so ein Festziehen und Lösen der Koppelschraube auch dann gewährleistet werden, wenn das Koppelelement und der Nutenstein die Längsnut des zweiten Bauteils nicht über die Fluchten des ersten Bauteils hinaus belegen sollen. Der Zugang zu der Koppelschraube ist dabei durch die Öffnung einer Längsnut des ersten Bauteils gegeben.

Vorzugsweise erfolgt die Abwinkelung um 5° bis 25°, wobei eine Abwinkelung von 10° bis 20° als besonders vorteilhaft gefunden wurde.

Bei den zu verbindenden Bauteilen handelt es sich vorzugsweise um Profilelemente, insbesondere um Montageprofile aus Aluminium, wie sie vor allem im Maschinenbau und in der Automatisierungstechnik Verwendung finden.

Diese werden in der Regel im Strangpressverfahren hergestellt und bei der Konstruktion von Gestellen, Verkleidungen, oder Ähnlichem eingesetzt.

Dabei ist eine Vielzahl von Profilsortimenten anzutreffen, die Längsnuten mit Hinterschneidung und Längsöffnungen, welche ohne weitere Bearbeitung als Gewindeeinzug verwendet werden können, aufweisen.

In einer weiteren bevorzugten Ausgestaltung der Erfindung weist das Koppelelement mehrere Ausnehmungen für den Eingriff mehrerer Ankerschrauben auf.

Ein derart ausgebildetes Koppelelement mit mehreren, in jeweils einen Gewindeeinzug eines ersten Bauteils eingreifenden, Ankerschrauben kommt dann besonders vorteilhaft zum Einsatz, wenn entsprechend große Kräfte über eine erfindungsgemäße Verbindungsvorrichtung übertragen werden müssen.

Bei einer derartigen Ausbildung der Vorrichtung weist der Nutenstein notwendigerweise eine entsprechende Anzahl von Ausnehmungen für das Versenken der Ankerschrauben auf.

Um eine universelle Verwendbarkeit des Koppelelements mit mehreren Ausnehmungen an unterschiedlich geformten Bauteilen zu gewährleisten, ist eine der Ausnehmungen in einer weiteren Variante vorzugsweise als Langloch ausgebildet.

Eine bevorzugte Ausbildung der Erfindung sieht vor, dass die mehreren Ausnehmungen innerhalb eines definierten Rasters in dem Koppelelement angeordnet sind, wodurch ebenfalls eine universelle Verwendung an unterschiedlichen Bauteilen ermöglicht wird.

Eine zusätzliche Montageerleichterung kann auch dadurch erreicht werden, dass die Ausnehmungen des Koppelelements, insbesondere die zweite Ausnehmung für die Durchsetzung mit der Koppelschraube nicht als lochförmige Ausnehmung, sondern einseitig geöffnet in der Form einer Gabel erfolgt. Bei einer solchen Ausbildung ist es beispielsweise möglich, zuerst die Koppelschraube in dem Nutenstein anzusetzen, dann den Nutenstein in einfacher Handhabung in die Längsnut einzusetzen und nachfolgend das Koppelelement unter den Kopf der bereits in dem Nutenstein angesetzten Koppelschraube zu schieben.

Die Verbindung eines ersten Bauteils mit einem zweiten Bauteil kann auch in der Weise erfolgen, das mehrere erfindungsgemäße Verbindungsvorrichtungen zum Verbinden der beiden Bauteile verwendet werden.

In einem solchen Fall werden mehrere Koppelelemente über jeweils eine Ankerschraube an mehreren, sich insbesondere gegenüberliegenden Gewindeeinzügen eines ersten Bauteils befestigt, wobei jedem Koppelelement weiterhin jeweils ein Nutenstein zugeordnet ist.

Die Nutensteine befinden sich dabei entweder in ein und der selben Längsnut oder aber in verschiedenen Längsnuten eines zweiten Bauteils.

Eine derartige Anordnung mehrerer, der Erfindung entsprechenden, Verbindungsvorrichtungen kommt insbesondere dann zum Einsatz, wenn das erste Bauteil nicht über einen, in dessen Stirnseite, mittig angeordneten Gewindeeinzug verfügt.

Dies ist beispielsweise dann der Fall, wenn als erstes Bauteil ein Hohlprofil, insbesondere ein Ständerprofil, verwendet werden soll.

In einer ebenfalls bevorzugten Ausbildung der Verbindungsvorrichtung ist ein erfindungsgemäßes Koppelelement als ein Doppelkoppelelement ausgebildet.

Doppelkoppelelement bedeutet, dass zwei Koppelelemente, welchen jeweils ein separater Nutenstein über jeweils eine separate Koppelschraube zugeordnet ist, zu einer Baueinheit verbunden sind.

Die Nutensteine können auch hierbei in ein und der selben Längsnut, oder aber in verschiedenen Längsnuten eines Bauteils angeordnet sein.

Ein derart ausgebildetes Doppelkoppelelement gewährt besondere Vorteile, wenn das erste Bauteil nicht über einen mittig in dessen Stirnseite angeordneten Gewindeeinzug verfügt und stattdessen zwei, vorzugsweise außermittig angeordnete, Gewindeeinzüge aufweist.

Das Doppelkoppelelement wird mittels zweier Ankerschrauben an den Gewindeeinzügen des ersten Bauteils befestigt und unter Verwendung von jeweils einer Koppelschrauben mit dem jeweiligen Nutenstein der insgesamt zwei Nutensteine verbunden.

Die Erfindung wird als Ausführungsbeispiel an Hand von
- Fig. 1: Explosionsdarstellung mit Vierkant-Profil
- Fig. 2: Schnittdarstellung als vorkonfektionierbare Baugruppe
- Fig. 3: Detailansicht eines gewinkelten Nutensteins
- Fig. 4: Explosionsdarstellung mit Doppelkoppelelement näher erläutert.

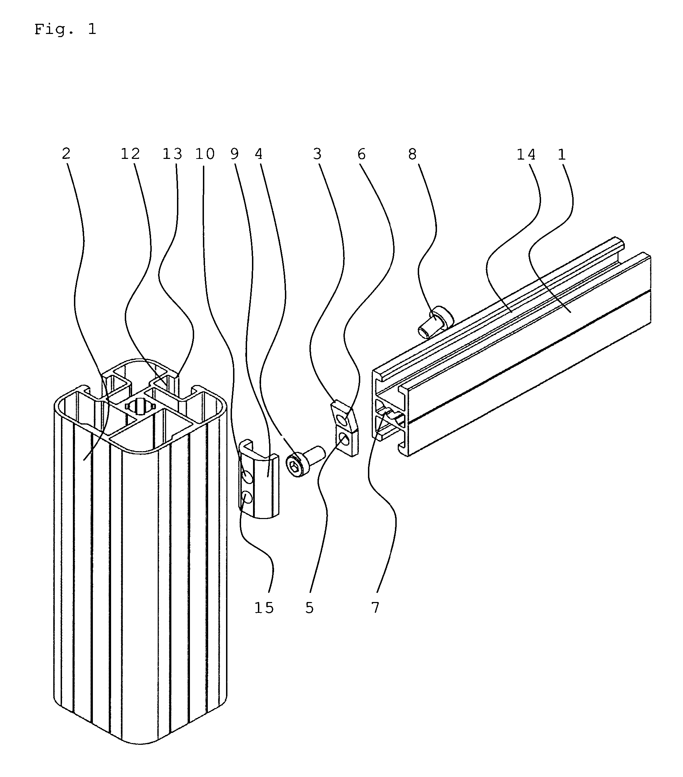

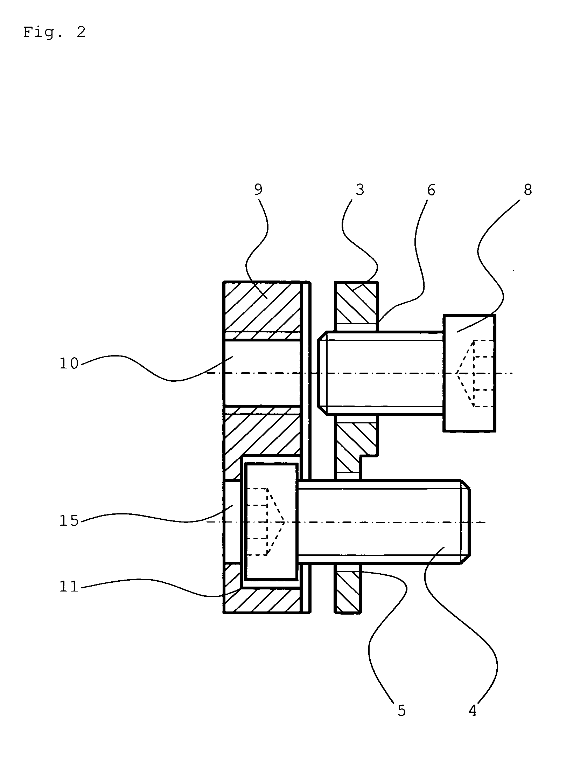

Fig. 1 und Fig. 2 zeigen eine erfindungsgemäße Verbindungsvorrichtung zum Verbinden eines ersten Bauteils 1 an dessen Stirnseite, mit einem zweiten Bauteil 2 an dessen genuteter Längsseite.

In der bevorzugten Ausführungsform wird zunächst eine vorkonfektionierte Baugruppe aus Nutenstein (9), Koppelschraube (8), Koppelelement (3) und Ankerschraube (4) gebildet.

Die Verbindungsvorrichtung weist ein Koppelelement 3 auf, welches mittels einer Ankerschraube 4 an einem stirnseitigen Ende des ersten Bauteils 1 befestigt wird.

Das Koppelelement 3 weist hierzu eine erste Ausnehmung 5 auf, welche durch die Ankerschraube 4 durchsetzt wird.

Als Ankerschraube 4 dient hierbei eine handelsübliche Zylinderschraube mit Innensechskant.

Das Koppelelement 3 weist weiterhin eine zweite Ausnehmung 6 auf, an deren Stelle das Koppelelement 3 von einer Koppelschraube 8 durchdrungen wird.

Dem Koppelelement 3 wird ein Nutenstein 9 mit einer Gewindebohrung 10 zugeordnet.

Dabei greift eine Koppelschraube 8 in die Gewindebohrung 10 des Nutensteins 9 ein und verbindet diesen, unter Verbleib eines Restspiels, mit dem Koppelelement 3.

Der Nutenstein 9 weist hierbei auf dessen, dem ersten Bauteil 1 zugewandten Seite eine Montageausnehmung (15) mit einer Aussparung 11 auf, welche bei der Verbindung von Koppelelement 3 und Nutenstein 9 zur Aufnahme des Kopfes der Ankerschraube 4 dient.

Dadurch wird es vorteilhaft ermöglicht, dass der Kopf der Ankerschraube 4 vollständig in der Aussparung 11 des Nutensteins 9 versenkt werden kann, wodurch bei der späteren Endmontage der Verbindungsvorrichtung ein, zumindest abschnittsweises, flächiges Anliegen von Koppelelement 3 und Nutenstein 9 erzielt wird.

Diese Vormontage wird bevorzugt herstellerseitig vorgenommen, so dass die vorkonfektionierte Baugruppe zur Endmontage bereits fertig vorliegt. Die Anordnung der Elemente der vorkonfektionierten Baugruppe ist in Fig. 2 dargestellt, wobei in der Darstellung die Koppelschraube 8 noch nicht in das Koppelelement 3 eingereift.

Die Endmontage beginnt mit der Befestigung der Baugruppe an der Stirnseite des ersten Bauteils 1 wie folgt. Die Ankerschraube 4 wird zum Befestigen des Koppelelements 3 an dem ersten Bauteil 1 in einen, mittig in dem ersten Bauteil 1 angeordneten, Gewindeeinzug 7 eingeschraubt und durch Anziehen der Ankerschraube 4, mittels eines geeigneten Sechskantschlüssels, welcher nicht Teil der Verbindungsvorrichtung ist, wobei der Zugang für den Sechskantschlüssel durch die Montageausnehmung (15) erfolgt, das Koppelelement 3 fest mit dem ersten Bauteil 1 verbunden.

Um das erste Bauteil 1 an dessen Stirnseite mit dem zweiten Bauteil 2 an dessen genuteter Längsseite zu verbinden, wird das, mit dem Koppelelement 3 und dem Nutenstein 9 versehene erste Bauteil 1, dem zweiten Bauteil 2 derart zugeführt, dass der Nutenstein 9 an einer offenen Seite in eine Längsnut 12 des zweiten Bauteils 2 eingeschoben wird.

Die Längsnut 12 ist dabei hinterschnitten. Dass bedeutet, dass sie an der, dem ersten Bauteil 1 gegenüberliegenden Seite zwei, sich ebenfalls gegenüberliegende Stege 13 aufweist.

Diese Stege 13 werden bei der Montage der Verbindungsvorrichtung von dem Nutenstein 9 hintergriffen.

Hierzu ist das bereits erwähnte Restspiel des montierten Nutensteins 9 größer, als die Dicke der Stege 13, wodurch ein unproblematisches Einschieben des Nutensteins 9 in die Längsnut 12 des zweiten Bauteils 2 ermöglicht wird.

Das Koppelelement 3 ist erfindungsgemäß so ausgebildet, dass dieses formschlüssig in den Bereich zwischen den Stegen 13 eingreift.

Dies führt zu einer Vorfixierung des ersten Bauteils 1 während des Verbindungsvorgangs, welche eine begrenzte Verdrehsicherheit des ersten Bauteils 1 gegenüber dem zweiten Bauteil 2 mit sich bringt und dadurch die Montage erleichtert.

Die endgültige Verbindung der beiden Bauteile 1 und 2 wird auf die Weise erzielt, dass die Koppelschraube 8, ebenfalls durch den bereits erwähnten Sechskantschlüssel, angezogen und dadurch der Nutenstein 9 gegen die Stege 13 gepresst wird, wodurch eine kraft- und formschlüssige Verbindung entsteht.

Der Kopf der Koppelschraube 8 liegt im fertig montierten Zustand formschlüssig an den seitlichen Wandungen einer, sich in dem ersten Bauteil 1 befindlichen, Längsnut 14 an.

Dieses formschlüssige Anliegen des Kopfes der Koppelschraube 8 an der Wandung der Längsnut 14 erzeugt eine Abstützung des ersten Bauteils 1 gegenüber einer Verdrehung, relativ zu dem zweiten Bauteil 2.

Somit erhält man durch diese Anordnung der Verbindungsvorrichtung eine zusätzliche Verdrehsicherheit durch einen zusätzlichen Formschluss.

Um das Verschrauben von Koppelelement 3 und Nutenstein 9 zu vereinfachen, sind das Koppelelement 3, sowie der diesem gegenüberliegende Bereich des Nutensteins 9 um jeweils 15° abgewinkelt ausgebildet.

Dadurch wird es besonders vorteilhaft ermöglicht, dass die Koppelschraube 8 ebenfalls in einem Winkel von 15° in den Nutenstein 9 eingeschraubt werden kann und dadurch für den Sechskantschlüssel einfach zu erreichen ist.

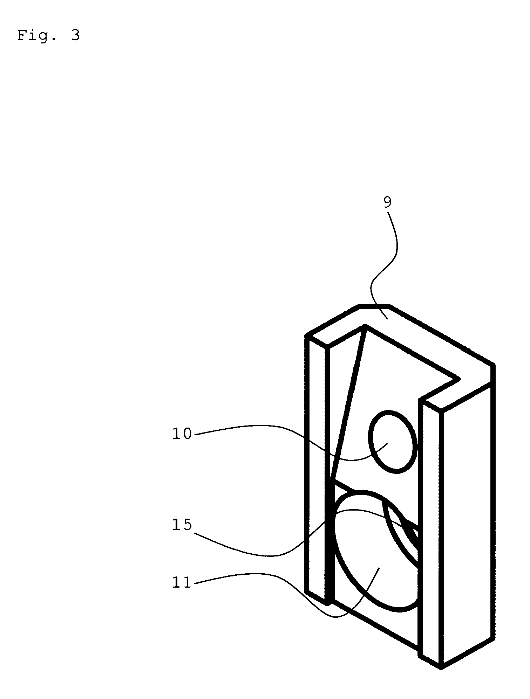

Fig. 3 zeigt eine bevorzugte Ausführungsform eines Nutensteins 9 der Verbindungsvorrichtung. Der Nutenstein ist im Bereich der Gewindebohrung 10 zur Aufnahme der Koppelschraube 8 abgewinkelt. In dieser Ausführungsform ist die Montage durch den möglichen schrägen Angriff für das Schraubwerkzeug erleichtert.

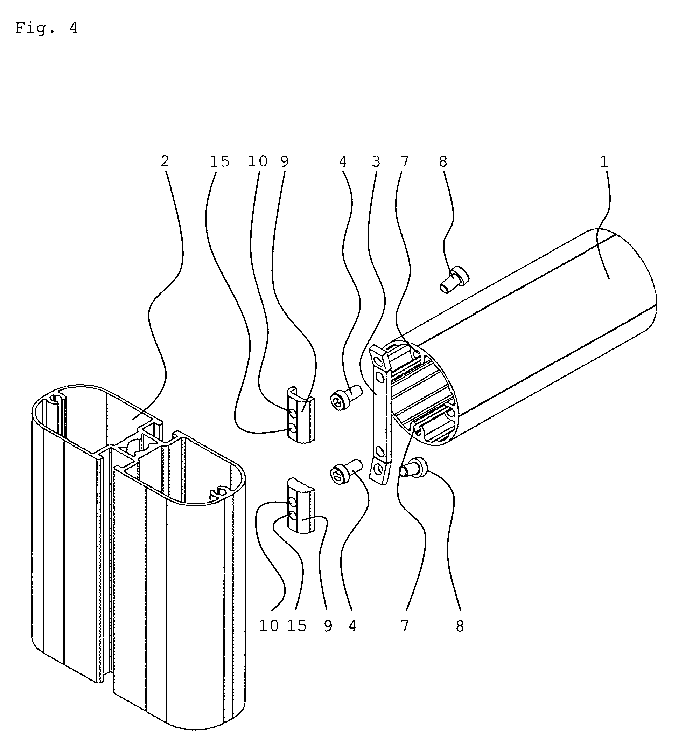

In Fig. 4 ist eine weitere bevorzugte Ausführungsform der Verbindungsvorrichtung dargestellt.

Bei dieser Ausführungsform ist das verwendete Koppelelement 3 als Doppelkoppelelement ausgebildet, welches die Aufnahme von zwei separaten, gleich ausgebildeten Nutensteinen 9 vorsieht.

Das Koppelelement 3 wird mittels zweier gleicher Ankerschrauben 4 in zwei, sich gegenüberliegenden Gewindeeinzügen 7 des ersten Bauteils 1 befestigt.

Die Verbindung des Koppelelements 3 mit den zwei Nutensteinen 9 erfolgt mittels zweier gleicher Koppelschrauben 8.

Ein als Doppelkoppelelement ausgebildetes Koppelelement 3 kommt, wie in Fig. 3 dargestellt insbesondere dann zum Einsatz, wenn das erste Bauteil 1 nicht über einen, mittig in dessen Stirnseite vorgesehenen Gewindeeinzug verfügt und stattdessen zwei, an den randzugewandten Bereichen der Stirnseite des ersten Bauteils angeordnete, Gewindeeinzüge 7 aufweist.

Als Bauteile kommen in den hier aufgeführten Ausführungsbeispielen vorzugsweise Montageprofile aus Aluminium zum Einsatz.

### Verwendete Bezugszeichen

- 1: erstes Bauteil
- 2: zweites Bauteil
- 3: Koppelelement
- 4: Ankerschraube
- 5: erste Ausnehmung
- 6: zweite Ausnehmung
- 7: Gewindeeinzug
- 8: Koppelschraube
- 9: Nutenstein
- 10: Gewindebohrung
- 11: Aussparung
- 12: Längsnut des zweiten Bauteils
- 13: Steg
- 14: Längsnut des ersten Bauteils
- 15: Montageausnehmung

## Patentansprüche

1. Verbindungsvorrichtung, mit welcher ein erstes Bauteil (1) an dessen Stirnseite mit einem zweiten Bauteil (2) an dessen genuteter Längsseite verbindbar ist, wobei das erste Bauteil (1) mindestens einen Gewindeeinzug (7) und das zweite Bauteil (2) mindestens eine Längsnut (12) mit mindestens einer Hinterschneidung aufweist, enthaltend einen Nutenstein (9) mit einer Gewindebohrung (10), mit welchem ein Eingriff in mindestens eine Hinterschneidung der Längsnut (12) bereitstellbar ist, **dadurch gekennzeichnet,**
**dass** die Verbindungsvorrichtung ein Koppelelement (3), mit einer ersten Ausnehmung (5), welche von einer Ankerschraube (4) durchsetzt ist, mit welcher in axialer Ausrichtung ein Eingriff in den Gewindeeinzug (7) des ersten Bauteils (1) bereitstellbar ist und wobei mittels der Ankerschraube (4) das Koppelelement (3) mit dem ersten Bauteil (1) an dessen Stirnseite verbindbar ist, sowie einer zweiten Ausnehmung (6), welche von einer Koppelschraube (8) durchsetzt ist, die in die Gewindebohrung (10) des Nutensteins (9) eingreift und das Koppelelement (3) mit dem Nutenstein (9) verbindet, aufweist, wobei der Nutenstein (9) eine Montageausnehmung (15) aufweist, durch welche die Ankerschraube (4) für ein Schraubwerkzeug zugänglich ist und dass durch die Verbindungsvorrichtung ein direktes stirnseitiges Anliegen des ersten Bauteils (1) an der Längsseite des zweiten Bauteils (2) bereitstellbar ist.

2. Verbindungsvorrichtung nach Anspruch 1,
**dadurch gekennzeichnet,**
**dass** der, dem Nutenstein (9) zugewandte Teil der Ankerschraube (4) von einer Aussparung (11) des Nutensteins (9) aufgenommen wird.

3. Verbindungsvorrichtung nach Anspruch 1,
**dadurch gekennzeichnet,**
**dass** die Montageausnehmung (15) die Ankerschraube (4) teilweise übergreift.

4. Verbindungsvorrichtung nach einem der vorhergehenden Ansprüche,
**dadurch gekennzeichnet,**
**dass** der dem Nutenstein (9) gegenüberliegende Teil der Koppelschraube (8) an dem ersten Bauteil (1) anliegt.

5. Verbindungsvorrichtung nach Anspruch 2,
**dadurch gekennzeichnet,**
**dass** der dem Nutenstein (9) gegenüberliegende Teil der Koppelschraube (8) an mindestens einer Wandung einer Längsnut (14) des ersten Bauteils (1) anliegt.

6. Verbindungsvorrichtung nach einem der vorhergehenden Ansprüche,
**dadurch gekennzeichnet,**
**dass** das Koppelelement (3) zumindest teilweise in eine Ausnehmung des ersten Bauteils (1) eingreift.

7. Verbindungsvorrichtung nach einem der vorhergehenden Ansprüche,
**dadurch gekennzeichnet,**
**dass** das Koppelelement (3) zumindest teilweise in die Längsnut (12) des zweiten Bauteils (2) eingreift.

8. Verbindungsvorrichtung nach einem der vorhergehenden Ansprüche,
**dadurch gekennzeichnet,**
**dass** das Koppelelement (3) und der diesem gegenüberliegende Bereich des Nutensteins (9) winklig ausgebildet sind.

9. Verbindungsvorrichtung nach einem der vorhergehenden Ansprüche,
**dadurch gekennzeichnet,**
**dass** es sich bei den Bauteilen um Profilelemente, insbesondere Montageprofile handelt.

10. Verbindungsvorrichtung nach einem der vorhergehenden Ansprüche,
**dadurch gekennzeichnet,**
**dass** das Koppelelement (3) mehrere Ausnehmungen für den Eingriff mehrerer Ankerschrauben (4) aufweist.

11. Verbindungsvorrichtung nach Anspruch 8,
**dadurch gekennzeichnet,**
**dass** mindestens eine Ausnehmung als Langloch ausgebildet ist.

12. Verbindungsvorrichtung nach Anspruch 8,
**dadurch gekennzeichnet,**
**dass** die Ausnehmungen innerhalb eines Rasters angeordnet sind.

13. Verbindungsvorrichtung nach einem der vorhergehenden Ansprüche,
**dadurch gekennzeichnet,**
**dass** das Koppelelement (3) als Doppelkoppelelement ausgebildet ist.

## Claims

1. Connecting device for the connection of the front side of a first component (1) to the grooved longitudinal side of a second component (2), with the first component (1) being provided with at least one thread feeder (7) and the second component (2) with at least one longitudinal groove (12) with at least one undercut, comprising a sliding block (9) with a threaded bore (10) which engages in at least one undercut of the longitudinal groove (12), wherein
the connecting device consists of a coupling element (3) that is provided with a first recess (5), which is penetrated by an anchor screw (4) that engages in axial orientation in the thread feeder (7) of the first component (1) and said anchor screw (4) can connect the coupling element (3) with the first component (1) at its front side, and a second recess (6), which is penetrated by a coupling screw (8) that engages into the threaded bore (10) of the sliding block (9) and connects the coupling element (3) with the sliding block (9), the sliding block (9) is provided with a mounting recess (15) through which the anchor screw (4) can be accessed by a screwing tool, and said connecting device makes it possible that the first component (1) is directly pressed with its front side to the longitudinal side of the second component (2).

2. Connecting device according to claim 1,
wherein
the part of the anchor screw (4) facing the sliding block (9) is received by a recess (11) of the sliding block (9).

3. Connecting device according to claim 1,
wherein
the anchor screw (4) is partly overlapped by the mounting recess (15).

4. Connecting device according to one of the previous claims,
wherein
the part of the coupling screw (8) that is in opposite position to the sliding block (9) is pressed against the first component (1).

5. Connecting device according to claim 2,
wherein
the part of the coupling screw (8) that is in opposite position to the sliding block (9) is pressed against at least one wall of a longitudinal groove (14) of the first component (1).

6. Connecting device according to one of the previous claims,
wherein
the coupling element (3) engages at least partly in a recess of the first component (1).

7. Connecting device according to one of the previous claims,
wherein
the coupling element (3) engages at least partly in the longitudinal grove (12) of the second component (2).

8. Connecting device according to one of the previous claims,
wherein
the coupling element (3) and the part of the sliding block (9) which is positioned opposite to it have an angular design.

9. Connecting device according to one of the previous claims,
wherein
the components are profiled elements, in particular mounting profiles.

10. Connecting device according to one of the previous claims,
wherein
the coupling element (3) is provided with several recesses for the engagement of several anchor screws (4).

11. Connecting device according to claim 8,
wherein
at least one recess is configured as an elongated hole.

12. Connecting device according to claim 8
wherein
the recesses are arranged within a grid.

13. Connecting device according to one of the previous claims,
wherein
the coupling element (3) is designed as a double-coupling element.

## Revendications

1. Dispositif de connexion, auquel un premier composant (1) peut être connecté à sa face avec un deuxième composant (2) à son côté longitudinal rainuré, le premier composant (1) étant muni d'un rentrage avec filetage (7) et le deuxième composant (2) étant muni au moins d'une rainure longitudinale (12) avec au moins une contredépouille, contenant une cale de rainure (9) avec un alésage fileté (10), à l'aide de laquelle un logement dans au moins une contredépouille de la rainure longitudinale (12) peut être mis à disposition,
est **caractérisé en ce que** le dispositif de connexion est muni d'un élément de couplage(3) avec un premier évidement (5), qui est traversé par une vis d'ancrage (4) à l'aide de laquelle le logement dans le rentrage avec filetage (7) du premier composant (1) peut être mis à disposition en alignement axial et à l'aide de laquelle l'élément de couplage (3) peut être connecté avec la face du premier composant (1) au moyen de la vis d'ancrage (4), ainsi qu d'un deuxième évidement (6), qui est traversé par une vis de couplage (8), qui s'engage dans l'alésage fileté (10) de la cale de rainure (9) et lie l'élément de couplage (3) avec la cale de rainure (9), qui est muni d'un évidement de montage (15) pour avoir accès à la vis d'ancrage (4) à l'aide d'un outil de vissage,
et que le dispositif de connexion peut être utilisé pour assurer un contact direct sur le côté frontal du premier composant (1) avec le côté longitudinal du deuxième composant (2).

2. Dispositif de connexion suivant la revendication 1
est **caractérisé**
**en ce que** la partie de la vis d'ancrage (4) tournée vers la cale de rainure (9) se loge dans une encoche (11) de la cale de rainure (9).

3. Dispositif de connexion suivant la revendication 1
est **caractérisé**
**en ce que** l'évidement de montage (15) vient partiellement en prise sur la vis d'ancrage (4).

4. Dispositif de connexion suivant une des revendications précédentes est **caractérisé,**
**en ce que** la partie de la vis de couplage (8) opposée à la cale de rainure (9) est en contact avec le premier composant (1).

5. Dispositif de connexion suivant la revendication 2 est **caractérisé**
**en ce que** la partie de la vis de couplage (8) opposée à la cale de rainure (9) est en contact avec - au moins - une paroi d'une rainure longitudinale (14) du premier composant (1).

6. Dispositif de connexion suivant une des revendications précédentes est **caractérisé**
**en ce que** l'élément de couplage (3) s'engage au moins partiellement dans un évidement du premier composant (1).

7. Dispositif de connexion suivant une des revendications précédentes est **caractérisé**
**en ce que** l'élément de couplage (3) s'engage au moins partiellement dans la rainure longitudinale (12) du deuxième composant (2).

8. Dispositif de connexion suivant une des revendications précédentes est **caractérisé**
**en ce que** l'élément de couplage (3) et la partie de la cale de rainure (9) opposée à l'élément de couplage sont réalisés sous forme d'un angle.

9. Dispositif de connexion suivant une des revendications précédentes est **caractérisé**
**en ce que** les composants sont des éléments profilés, en particulier des profilés de montage.

10. Dispositif de connexion suivant une des revendications précédentes est **caractérisé**
**en ce que** l'élément de couplage (3) est muni de plusieurs évidements pour le logement de plusieures vis d'ancrage (4).

11. Dispositif de connexion suivant la revendication 8 est **caractérisé**
**en ce qu'**au moins un évidement est conçu comme un trou oblong.

12. Dispositif de connexion suivant la revendication 8 est **caractérisé**
**en ce que** les évidements sont disposés sous forme de quadrillage.

13. Dispositif de connexion suivant une des revendications précédentes est **caractérisé**
**en ce que** l'élément de couplage (3) est conçu comme double élément de couplage.
